# EUROPÄISCHE PATENTSCHRIFT

(11) **EP 2 679 623 B1**
(45) Veröffentlichungstag und Bekanntmachung des Hinweises auf die Patenterteilung: **11.01.2017**
(21) Anmeldenummer: 13172448.6
(22) Anmeldetag: 18.06.2013
(51) Int. Cl.: C08K 5/00

(54) **Härter für Epoxidharzsysteme und deren Verwendung**
Curing agent for epoxy resin systems and their use
Durcisseur pour système de résine époxy et leur utilisation

(30) Priorität: 29.06.2012 DE 102012211323
(43) Veröffentlichungstag der Anmeldung: 01.01.2014
(60) Teilanmeldung: 14152969.3
(73) Patentinhaber: Evonik Degussa GmbH, 45128 Essen (DE)
(72) Erfinder: Rinker, Stefanie, Dr., 46569 Hünxe (DE); von Itter, Franz-Albert, Dr., 53347 Alfter (DE); Bressel, Bettina, Dr., 45770 Marl (DE); Willy, Benjamin, Dr., 40211 Düsseldorf (DE); Neumann, Manfred, Dr., 45770 Marl (DE); Jones, Chris, 63165 Mühlheim (DE); Dimmit, Jeffrey H, Joplin, MO 64801 (US)

(56) Entgegenhaltungen:
- GB-A- 2 025 424
- US-A- 3 794 555
- US-A- 3 989 573

## Beschreibung

Die vorliegende Erfindung betrifft ein Härtersystem für Epoxidharze enthaltend i) mindestens eine aromatische Dianhydridverbindung A mit einem Schmelzpunkt von mindestens 35 °C, ii) mindestens eine Monoanhydridverbindung B mit einem Schmelzpunkt von nicht mehr als 30 °C und iii) mindestens einen Katalysator C, wobei die aromatische Dianhydridverbindung A in dem Härtersystem dispergiert vorliegt. Weiterer Gegenstand sind die Verwendung der genannten Härtersysteme zur Härtung von Epoxidharzsystemen.

Epoxidharze gehören zu den vielseitigsten polymeren Werkstoffen. Sie finden Anwendungen z. B. als Beschichtungen, Klebstoffe, Gießharzmassen, Formmassen, als Einbettmassen zur Umhüllung elektronischer Bauteile, als Laminate und Basismaterial für gedruckte Schaltungen sowie als Matrixharze für faserverstärkte Kunststoffe.

Die Überführung von monomeren oder oligomeren Epoxidharzen in polymere Stoffe erfordert Reaktionspartner, die man als Härter oder Härtungsmittel bezeichnet. Je nach Typ des Härters erfolgt die Härtungsreaktion bei Temperaturen um Raumtemperatur oder niedrigen Temperaturen (sogenannte "Kalthärtung") oder bei erhöhten Temperaturen (sogenannte "Warm- oder Heißhärtung"). Zur Härtung von Epoxidharzen bei niedrigen Temperaturen für technische Anwendungen werden vorwiegend nur aliphatische primäre oder sekundäre Amine und Polyamine eingesetzt, seltener dagegen Polythiole oder spezielle Salze.

Alle unmodifizierten Amine reagieren alkalisch bis stark alkalisch. Flüssige Amine, insbesondere die aliphatischen und cycloaliphatischen, können Hautschädigungen bis zur Verätzung verursachen. Nachteilig ist auch die hohe Flüchtigkeit der flüssigen Amine. Ein großer Nachteil der Kalthärtung von Epoxidharzen mit den oben erwähnten Härtungsmitteln ist die geringe Temperatur- und Chemikalienbeständigkeit der entstehenden Produkte. Zur Erhöhung der Temperatur-, Lösungsmittel- und Chemikalienbeständigkeit ist man gezwungen, Epoxidharze bei erhöhten Temperaturen in einer Heißhärtung mit aromatischen oder cycloaliphatischen Aminen, Carbonsäureanhydriden, Polyphenolen oder mit latenten Härtern auszuhärten.

Es besteht jedoch die Nachfrage nach Epoxidharz-Härter-Systemen, die bei möglichst niedriger Temperatur aushärten können und Produkte ergeben, die eine erhöhte Temperatur-, Chemikalien- und Lösungsmittelbeständigkeit aufweisen. Potentielle Anwendungen hierfür sind z. B. Klebstoffe, Matrixharze für Faserverbundwerkstoffe und Reparaturharze für Bauteile, bei denen sich die Anwendung hoher Temperaturen nicht anbietet. Weitere Anwendungen sind Gießharz- und Einbettmassen, speziell zur Umhüllung von großen elektronischen Bauteilen, bei denen die Aushärtung bei niedriger Temperatur, mit niedriger Exothermie und folglich mit beträchtlicher Energieeinsparung ablaufen kann, wobei ein weiterer Vorteil ist, dass Produkte mit verminderter innerer Spannung entstehen.

Aus der Literatur ist bekannt, dass die Härtung von Epoxidharzen, insbesondere bei Bisphenol-A-Harzen, mit cyclischen Dicarbonsäureanhydriden und Tetracarbonsäurebisanhydriden immer Härtungstemperaturen von mindestens 120 - 150 °C erfordern, wobei dann noch Härtungszeiten von mehreren Stunden benötigt werden, siehe Houben-Weyl, Methoden der Organischen Chemie, Band E20, Makromolekulare Stoffe, Georg Thieme Verlag Stuttgart, 1987, Seite 1959. Selbst bei diesen Temperaturen ist die Vernetzungsreaktion noch so langsam, dass auf den Einsatz von Beschleunigern in der Regel nicht verzichtet werden kann. Von Vorteil ist jedoch, dass die Härtung mit Anhydriden im Vergleich zur Härtung mit Aminen mit geringerer Exothermie abläuft. Die gehärteten Produkte haben gute elektrische Isoliereigenschaften und eine gute thermische Beständigkeit.

In der Literatur ist nur ein Beispiel für die Härtung von Epoxidharzen mit cyclischen Säureanhydriden bei niedrigen Temperaturen beschrieben worden, siehe US 4,002,599. Es werden jedoch nur Systeme auf Basis polyglycidylsubstituierter Aminophenole beschrieben.

Die DE 2837726 beschreibt Epoxidharzzusammensetzungen aus mindestens einem Epoxidharz und einem Härtungsmittel, wobei das Härtungsmittel 2,3,3',4'-Diphenyltetracarbonsäureanhydrid enthält. Gemäß der Lehre der DE 2837726 muss das Dianhydrid erst gelöst werden bevor eine Härtung erfolgen kann, zum Teil wird die Mischung sogar wieder abgekühlt. Dies kann zu Problemen führen, insbesondere kann ein Abscheiden des Härtungsmittels erfolgen.

Aufgabe der vorliegenden Erfindung ist die Bereitstellung von verbesserten Härtersystemen für die Härtung von Epoxidharzen. Die genannten Härter sollen einfach zu verarbeiten sein, und nach Härtung zu Harzsystemen mit einer guten, dauerhaften Wärme-Formbeständigkeit führen. Insbesondere soll auf den Zusatz von Lösungsmitteln zur Einarbeitung der Härter verzichtet werden können.

Die erfindungsgemäßen Härtersysteme erfüllen das komplexe Anforderungsprofil. Gegenstand der vorliegenden Erfindung sind somit Härtersysteme für Epoxidharze enthaltend i) mindestens eine aromatische Dianhydridverbindung A mit einem Schmelzpunkt von mindestens 35 °C, ii) mindestens eine Monoanhydridverbindung B mit einem Schmelzpunkt von nicht mehr als 30 °C und iii) mindestens einen Katalysator C, wobei die aromatische Dianhydridverbindung A in dem Härtersystem dispergiert vorliegt.

Bei der erfindungsgemäßen Härtermischung kann das System zusätzlich noch weitere Additive, wie beispielsweise Gleitmittel, Antiblockmittel, Trennmittel, Stabilisatoren, beispielsweise Antioxidantien, Lichtschutzmittel, Wärmestabilisatoren oder Schaumstabilisatoren, Antistatika, leitfähige Zusatzstoffe, Flammschutzmittel, Pigmente, Schlagzähmodifier, Flexibilisatoren, Weichmacher, Haftvermittler, Füllstoffe, beispielsweise Ruß, Calciumcarbonat, Talkum, Silikate, Baumwollflocken, synthetische Polymere, Metallpulver, Graphit oder Glasfasern, Verstärkungsmaterialien, Treibmittel, Kicker, Nukleierungsmittel, antibakterielle Mittel oder Fungizide aufweisen. Als die genannten Additive können im erfindungsgemäßen Verfahren alle Stoffe verwendet werden, die dem Fachmann zur Herstellung von Epoxidharzsystemen als geeignete Additive bekannt sind.

Die erfindungsgemäßen Härtersysteme eignen sich in besonderer Weise für den Einsatz in Epoxidharzen. So sind die für die Härtung erforderlichen Komponenten bereits vollständig im Härtersystem enthalten, die Zugabe weiterer Zusatzstoffe bei der Härtung beim Anwender ist entbehrlich. Weiterhin werden insbesondere preiswerte und kommerziell verfügbare aromatische Dianhydride, wie beispielsweise 5,5'-Carbonylbis(isobenzofuran-1,3-dion) (s-BTDA), eingesetzt. Dies ist überraschend, da es sich bei den aromatischen Dianhydriden A um Feststoffe mit einem hohen Schmelzpunkt handelt. Diesen Feststoffen wird nachgesagt, dass sie sich nur äußerst schwer in das Harzsystem einarbeiten lassen. So ist gemäß der Lehre aus DE 2837726, DE 2256277 oder US 3,989,573 eine homogene Verarbeitung der Dianhydride nur bei Temperaturen oberhalb deren Schmelzpunktes oder durch Zusatz von Lösungsmitteln bzw. mit speziellen Epoxidharzen möglich. GB2025424 beschreibt die homogene Verarbeitung von Dianhydriden bei Temperaturen oberhalb des Schmelzpunktes mit speziellen Epoxidharzen. Im Rahmen der vorliegenden Erfindung wurde überraschend festgestellt, dass bei den erfindungsgemäßen Härtersystemen weder der Zusatz von Lösungsmitteln, noch die homogene Verteilung durch Schmelzen erforderlich ist. Auch die Härtung der mit dem erfindungsgemäßen Härtersystem versetzten Epoxidharze kann entgegen dem Stand der Technik unterhalb der Schmelztemperatur der eingesetzten aromatischen Dianhydride erfolgen. Vielmehr erlaubt das erfindungsgemäße Härtersystem eine einfache Verarbeitung bei Raumtemperatur ohne Zusatz von Lösungsmitteln. Weiterhin kann die Härtung bei niedrigen Temperaturen erfolgen. Die gehärteten Harzsysteme zeigen bei Einsatz der erfindungsgemäßen Härtersysteme eine hohe Wärmeformbeständigkeit auch bei Temperaturen oberhalb von 200 °C. Die gehärteten Harzsysteme sind homogen, insbesondere wird kein Absetzen einzelner Komponenten und keine Rissbildung beobachtet.

Ein besonderer Vorteil des erfindungsgemäßen Härtersystems besteht in seiner leichten Handhabbarkeit. Diese ergibt sich dadurch, dass das System als Dispersion vorliegt und keines weiteren Zusatzes von Lösungsmittel bedarf. Die gehärteten Systeme weisen bei entsprechenden Härtungsvorgängen hohe Glasübergangstemperaturen sowie eine hohe Wärmeformbeständigkeit auf.

Das erfindungsgemäße Härtersystem zeichnet sich durch eine Kombination aus i) mindestens einer aromatischen Dianhydridverbindung A mit einem Schmelzpunkt von mindestens 35 °C, ii) mindestens einer Monoanhydridverbindung B mit einem Schmelzpunkt von nicht mehr als 30 °C und iii) mindestens einem Katalysator C, wobei die aromatische Dianhydridverbindung A in dem Härtersystem dispergiert vorliegt, aus.

Die aromatische Dianhydridverbindung A ist ausgewählt aus Benzo[1,2-c:4,5-c']difuran-1,3,5,7-tetraon (PMDA), [4,4'-Biisobenzofuran]-1,1',3,3'-tetraon (a-BPDA), [4,5'-Biisobenzofuran]-1,1',3,3'-tetraon (s-BPDA), 5,5'-(Perfluoropropan-2,2-diyl)bis(isobenzofuran-1,3-dion) (6FDA), 5,5'-Carbonylbis(isobenzofuran-1,3-dion) (s-BTDA), 4-(1,3-Dioxo-1,3-dihydroisobenzofuran-5-carbonyl)isobenzofuran-1,3-dion (a-BTDA), 5,5'-Oxybis(isobenzofuran-1,3-dion) (OPDA), 5,5'-Sulfonylbis(isobenzofuran-1,3-dion) (DSDA), Isochromeno[6,5,4-def]isochromen-1,3,6,8-tetraon (NTCDA) und/oder deren substituierten Derivaten.

Für die vorliegende Erfindung ausgewählte aromatische Dianhydridverbindungen A sind in der Tabelle 1 unter Angabe der vorab verwendeten Abkürzungen und ihrer chemischen Strukturformel wiedergegeben.

**Tabelle 1**

| Abkürzung | Struktur | | Abkürzung | Struktur |
|---|---|---|---|---|
| s-BTDA | 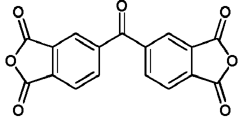 | | a-BTDA | 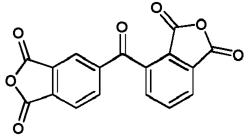 |
| s-BPDA | 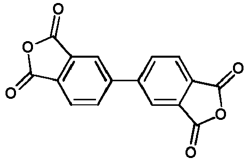 | | a-BPDA | 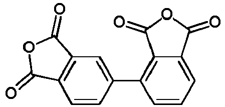 |
| OPDA | 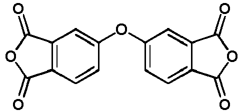 | | DSDA | 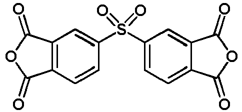 |
| 6FDA | 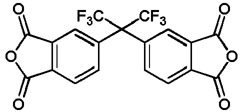 | | NTCDA | 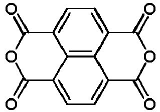 |
| PMDA | 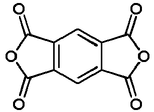 | | | |

Insbesondere bevorzugt ist die aromatische Dianhydridverbindung A ausgewählt aus 5,5'-Carbonylbis(isobenzofuran-1,3-dion) (s-BTDA), und/oder Benzo[1,2-c:4,5-c']difuran-1,3,5,7-tetraon (PMDA).

Die genannten aromatischen Dianhydridverbindungen A weisen einen Schmelzpunkt von mindestens 35 °C, vorzugsweise von mindestens 100 °C und insbesondere bevorzugt von mindestens 180 °C, das heißt sie liegen bei Raumtemperatur in fester Form dispergiert im Härtersystem vor.

Die mittlere Partikelgröße der eingesetzten aromatischen Dianhydridverbindungen A, das heißt der mittlere Durchmesser der Partikel, beträgt vorzugsweise weniger als 100 µm, insbesondere bevorzugt weniger als 10 µm. Die mittlere Partikelgröße wird mithilfe von Lichtstreuung bestimmt. Hierbei kommt eine Partikelgrößenbestimmung nach DIN EN ISO 8130-13 zur

### Anwendung.

Der Anteil der aromatischen Dianhydridverbindungen A in dem erfindungsgemäßen Härtersystem beträgt insbesondere 0,5 bis 80 Gew.-%, vorzugsweise 1 bis 60 Gew.-% und ganz besonders bevorzugt 5 bis 50 Gew.-%.

Eine weitere wesentliche Komponente des erfindungsgemäßen Härtersystems ist die mindestens eine Monoanhydridverbindung B mit einem Schmelzpunkt von nicht mehr als 30 °C, vorzugsweise von nicht mehr als 25 °C und insbesondere bevorzugt von nicht mehr als 20 °C.

Die erfindungsgemäß eingesetzte Monoanhydridverbindung B ist insbesondere ausgewählt aus der Gruppe umfassend cyclische Anhydride von aromatischen, aliphatischen, cycloaliphatischen und heterocyclischen Polycarbonsäuren. Die Carbonsäureanhydride können zusätzliche funktionelle Gruppen enthalten. Beispiele für Monoanhydridverbindungen B sind Methylhexahydroisobenzofuran-1,3-dion (MHHPSA) sowohl als Reinsubstanz als auch als Isomerengemisch, 5-Methyl-3a,4,7,7a-tetrahydro-4,7-methanoisobenzofuran-1,3-dion (MNA), 3-Methylfuran-2,5-dion, 3,3,4,4,5,5-hexafluorodihydro-2*H*-pyran-2,6(3*H*)-dion und/oder 3,3-Dimethyldihydrofuran-2,5-dion wobei Methylhexahydroisobenzofuran-1,3-dion (MHHPSA) und/oder 5-Methyl-3a,4,7,7a-tetrahydro-4,7-methanoisobenzofuran-1,3-dion (MNA) ganz besonders bevorzugt sind.

In einer alternativen Ausführungsform der vorliegenden Erfindung ist die Monoanhydridverbindung B insbesondere Methylhexahydroisobenzofuran-1,3-dion (MHHPSA), 5-Methyl-3a,4,7,7a-tetrahydro-4,7-methanoisobenzofuran-1,3-dion (MNA), 5-Methyl-3a,4,7,7 a-tetrahydroisobenzofuran-1,3-dion (MTHPA), 3-Methylfuran-2,5-dion, 3,3,4,4,5,5-hexafluorodihydro-2*H*-pyran-2,6(3*H*)-dion und/oder 3,3-Dimethyldihydrofuran-2,5-dion; bevorzugt 5-Methyl-3a,4,7,7a-tetrahydro-4,7-methanoisobenzofuran-1,3-dion (MNA), 5-Methyl-3 a,4,7,7 a-tetrahydroisobenzofuran-1,3-dion (MTHPA), 3-Methylfuran-2,5-dion, 3,3,4,4,5,5-hexafluorodihydro-2*H*-pyran-2,6(3*H*)-dion und/oder 3,3-Dimethyldihydrofuran-2,5-dion; besonders bevorzugt 5-Methyl-3a,4,7,7a-tetrahydro-4,7-methanoisobenzofuran-1,3-dion (MNA) und/oder 5-Methyl-3 a,4,7,7 a-tetrahydroisobenzofuran-1,3-dion (MTHPA); ganz besonders bevorzugt 5-Methyl-3 a,4,7,7 a-tetrahydroisobenzofuran-1,3-dion (MTHPA) oder 5-Methyl-3a,4,7,7a-tetrahydro-4,7-methanoisobenzofuran-1,3-dion (MNA); am bevorzugtesten 5-Methyl-3 a,4,7,7 a-tetrahydroisobenzofuran-1,3-dion (MTHPA).

MTHPA hat die folgende Struktur:

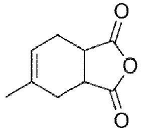

Das im Stand der Technik beispielsweise in EP 1091992 genannte Maleinsäureanhydrid ist im Rahmen der vorliegenden Erfindung nicht als Monoanhydridverbindung B geeignet, da der Schmelzpunkt von Maleinsäureanhydrid oberhalb von 30 °C liegt.

Der Anteil der Monoanhydridverbindung B in dem erfindungsgemäßen Härtersystem beträgt insbesondere 20 bis 99 Gew.-%, vorzugsweise 40 bis 99 Gew.-% und ganz besonders bevorzugt 50 bis 95 Gew.-%.

Weiterhin enthält das erfindungsgemäße Härtersystem mindestens einen Katalysator C. Bevorzugt ist der Katalysator C ausgewählt aus Aminen, cycloaliphatischen oder aromatischen *N*-Heterocyclen, oder phenolischen Aminen und/oder Metallsalzen nach dem Stand der Technik. Beispiele für Amine sind: *N¹*,*N¹*-Dimethylpropan-1,3-diamin (DMAPA), *N',N',N³,N³*-tetramethylpropan-1,3-diamin, *N¹,N¹,N²,N²*-Tetramethylethan-1,2-diamin, *N*,*N*-Dimethyl-1-benzylamin, *N,N-*Diethyl-1-benzylamin, Triethylamin, Tripropylamin, Diisopropylethylamin, 2-Dimethylaminoethanol und/oder 2-Diethylaminoethanol.

Cycloaliphatische oder aromatische *N*-Heterocyclen, die erfindungsgemäß verwendet werden können, sind zum Beispiel Pyrrolidin, Piperidin, 1-Benzylpiperidin, Piperazin, 1,4-Dimethylpiperazin, 2,2,6,6-Tetramethylpiperidin, 2,2,6,6-Tetramethylpiperidin-4-amin, *N*-Alkyl-2,2,6,6-tetramethylpiperidin-4-amin, *N¹,N¹*-Dimethyl-*N³*-(2,2,6,6-tetramethylpiperidin-4-yl)propan-1,3-diamin, 2,2,6,6-Tetramethylpiperidin-4-ol, 1,2,2,6,6-Pentamethylpiperidin-4-ol, 4-Alkoxy-2,2,6,6-tetramethylpiperidin, *N¹*,*N*⁶-Bis(2,2,6,6-tetramethylpiperidin-4-yl)hexan-1,6-diamin,1*H*-Pyrrol, 1*H*-Imidazol, 1-Methyl-1*H*-imidazol (1MZ), 3-(2-Ethyl-4-methyl-1*H*-imidazol-1-yl)propannitril (2E4MZ-CN), 2-Ethyl-4-methyl-1*H*-imidazol (2E4MZ), 2-Methyl-1*H*-imidazol (2MZ), 2-Phenyl-1*H*-imidazol (2PZ), 1-Benzyl-2-methyl-1*H*-imidazol (1 B2MZ), 1-Benzyl-2-phenyl-1*H*-imidazol (1B2PZ), (4-Methyl-2-phenyl-1*H*-imidazol-5-yl)methanol (2P4MHZ), (2-Phenyl-1*H*-imidazol-4,5-diyl)dimethanol (2PHZ), 6-(2-(2-Methyl-1*H*-imidazol-1-yl)ethyl)-1,3,5-triazin-2,4-diamin (2MZ-A), 2,3-Dihydro-1*H*-benzo[d]pyrrolo[1,2-a]imidazol (TBZ), 1,3-Dialkyl-1*H*-imidazol-3-iumsalze, insbesondere Carboxylate, Halogenide, Sulfonate, Nitrate, Sulfate oder Hydrogensulfate, Pyridin, 2-Methylpyridin, 3-Methylpyridin, 4-Methylpyridin und/oder 2,6-Dimethylpyridin.

Als Vertreter der phenolischen Amine eignen sich unter anderem 4-Dimethylaminomethylphenol, 2,6-Di-*tert*-butyl-4-dimethylaminomethylphenol (lonol^{®} 103), 2,4,6-Trisdimethylaminomethylphenol und/oder 2,4-Bisdimethylaminomethyl-6-methylphenol.

Beispiele für Metallsalze sind unter anderem Zink(II)-acetylacetonat, 1-Methylimidazoliumzink(II)-acetylacetonat ((1MZ)Zn(acac)₂), Bis(1-methylimidazolium)-eisen(II)-acetylacetonat ((1MZ)₂(Fe(acac)₂), Zinnoctanoat und/oder Bortrifluoridkomplexe, beispielsweise Etherate oder Komplexe mit Ethylamin.

Besonders bevorzugt ist der Katalysator C ausgewählt aus *N,N*-Dimethyl-1-benzylamin, *N¹,N¹*-Dimethyl-*N³*-(2,2,6,6-tetramethylpiperidin-4-yl)propan-1,3-diamin, 1,2,2,6,6-Pentamethylpiperidin-4-ol, 2-Ethyl-4-methyl-1*H*-imidazol (2E4MZ), 1-Methyl-1*H*-imidazol (1MZ), 2-Phenyl-1*H-*imidazol (2PZ), (4-Methyl-2-phenyl-1*H*-imidazol-5-yl)methanol (2P4MHZ), (2-Phenyl-1*H*-imidazol-4,5-diyl)dimethanol (2PHZ), 1,3-Dialkyl-1*H*-imidazol-3-iumsalzen, insbesondere Propanoate oder Methansulfonate, 2,6-Di-*tert*-butyl-4-dimethylaminomethylphenol (lonol^{®} 103) und/oder 1-Methylimidazolium-zink(II)-acetylacetonat ((1MZ)Zn(acac)₂).

Ganz besonders bevorzugt ist der Katalysator C ausgewählt aus *N,N*-Dimethyl-1-benzylamin, 1-Methyl-1*H*-imidazol (1MZ), (4-Methyl-2-phenyl-1*H*-imidazol-5-yl)methanol (2P4MHZ), (2-Phenyl-1 *H*-imidazol-4,5-diyl)dimethanol (2PHZ), 1,3-Dialkyl-1*H*-imidazol-3-iumsalzen, insbesondere Propanoate oder Methansulfonate, 2,6-Di-*tert*-butyl-4-dimethylaminomethylphenol (lonol^{®} 103) und/oder 1-Methylimidazolium-zink(II)-acetylacetonat ((1MZ)Zn(acac)₂).

Der Anteil des Katalysators C in dem erfindungsgemäßen Härtersystem beträgt insbesondere 0,001 bis 5,0 Gew.-%, vorzugsweise 0,01 bis 3,0 Gew.-% und ganz besonders bevorzugt 0,1 bis 2,0 Gew.-%. Es ist dabei unerheblich, ob der verwendete Katalysator C in fester oder flüssiger Form vorliegt.

Insbesondere bevorzugt weist das erfindungsgemäße Härtersystem folgende Zusammensetzung auf:
i) 5 bis 50 Gew.-% 5,5'-Carbonylbis(isobenzofuran-1,3-dion) (s-BTDA), und/oder Benzo[1,2-c:4,5-c']difuran-1,3,5,7-tetraon (PMDA),
ii) 50 bis 95 Gew.-% Methylhexahydroisobenzofuran-1,3-dion (MHHPSA) und/oder 5-Methyl-3a,4,7,7a-tetrahydro-4,7-methanoisobenzofuran-1,3-dion (MNA)
iii) 0,1 bis 2,0 Gew.-% *N,N*-Dimethyl-1-benzylamin, 1-Methyl-1*H*-imidazol (1MZ), (4-Methyl-2-phenyl-1*H*-imidazol-5-yl)methanol (2P4MHZ), (2-Phenyl-1*H*-imidazol-4,5-diyl)dimethanol (2PHZ), 1,3-Dialkyl-1*H*-imidazol-3-iumsalze, insbesondere Propanoat oder Methansulfonat, 2,6-Di-tert-butyl-4-dimethylaminomethylphenol (lonol^{®} 103) und/oder 1-Methylimidazoliumzink(II)-acetylacetonat ((1MZ)Zn(acac)₂).

Alternativ weist das erfindungsgemäße Härtersystem insbesondere folgende Zusammensetzung auf:
i) 5 bis 50 Gew.-% 5,5'-Carbonylbis(isobenzofuran-1,3-dion) (s-BTDA), und/oder Benzo[1,2-c:4,5-c']difuran-1,3,5,7-tetraon (PMDA),
ii) 50 bis 95 Gew.-% Methylhexahydroisobenzofuran-1,3-dion (MHHPSA), 5-Methyl-3a,4,7,7a-tetrahydro-4,7-methanoisobenzofuran-1,3-dion (MNA) und/oder 5-Methyl-3 a,4,7,7 a-tetrahydroisobenzofuran-1,3-dion (MTHPA),
iii) 0,1 bis 2,0 Gew.-% *N,N*-Dimethyl-1-benzylamin, 1-Methyl-1H-imidazol (1MZ), (4-Methyl-2-phenyl-1 H-imidazol-5-yl)methanol (2P4MHZ), (2-Phenyl-1H-imidazol-4,5-diyl)dimethanol (2PHZ), 1,3-Dialkyl-1*H*-imidazol-3-iumsalze, insbesondere Propanoat oder Methansulfonat, 2,6-Di-*tert*-butyl-4-dimethylaminomethylphenol (lonol^{®} 103) und/oder 1-Methylimidazoliumzink(II)-acetylacetonat ((1MZ)Zn(acac)₂).

Ebenfalls Gegenstand der vorliegenden Erfindung ist die Verwendung von Härtersystemen gemäß der vorliegenden Erfindung zur Härtung von Epoxidharzsystemen. Weiterhin sind Gegenstand der vorliegenden Erfindung Epoxidharzsysteme, umfassend mindestens ein Epoxidharz und mindestens ein Härtersystem gemäß der vorliegenden Erfindung. Das erfindungsgemäße Härtersystem hat den Vorteil, dass es als solches in die Epoxidharze eingearbeitet werden kann, ohne dass ein Zusatz weiterer Hilfsstoffe, insbesondere Lösungsmittel, erforderlich ist. Vorzugsweise enthält das erfindungsgemäße Epoxidharzsystem daher keine Lösungsmittel. Ein weiterer Vorteil der vorliegenden Erfindung liegt in der Möglichkeit unterhalb der Schmelzpunkte der Dianhydridverbindung A, beispielsweise bei weniger als 180 °C, eine Aushärtung zu erreichen und dabei, bei Wahl geeigneter Härtungszyklen, zu ausgehärteten, wärmeformstabilen Systemen mit einer hohen Glastemperatur, insbesondere oberhalb von 200 °C zu gelangen.

Grundsätzlich gibt es keine Einschränkungen hinsichtlich der einzusetzenden Epoxidharze, das heißt es können auch Mischungen unterschiedlicher Epoxidharze vorliegen. Vorzugsweise liegt mindestens ein Epoxidharz mit mindestens 2 Epoxy-Gruppen pro Monomer vor. Das genannte Epoxidharz mit mindestens 2 Epoxy-Gruppen pro Monomer kann allein oder in Mischung mit weiteren Epoxidharzen eingesetzt werden.

Insbesondere bevorzugt liegen in dem erfindungsgemäßen Epoxidharzsystem keine aminischen Epoxidharze vor, wie sie beispielsweise in EP 0181337 oder EP 1091992 beschrieben sind.

Beispiele für geeignete Epoxidharze sind Epoxidharze vom Glycidylether-Typ, die aus Bisphenol A und Epihalogenhydrinen synthetisiert werden können; Epoxidharze vom Glycidylester-Typ, die aus Phthalsäure und Epihalogenhydrinen synthetisiert werden können; alicyclische Epoxidharze, die durch Epoxidierung von alicyclischen Dienen, wie Cyclopentadien oder Cyclohexadien, erhalten werden können; Epoxidierungsprodukte von ungesättigten Polymeren, wie Polybutadien und Polyisopren; und Polymere oder Copolymere von ungesättigten Monoepoxiden, wie Glycidylmethacrylat oder Allylglycidylether. Diese Aufzählung ist lediglich beschreibend. So ist es beispielsweise möglich, verschiedene, mehrwertige Phenole anstelle von Bisphenol A einzusetzen oder andere, mehrbasische Säuren anstelle der Phthalsäure zu verwenden.

Der Anteil des Härtersystems in der Mischung mit den Epoxidharzen ergibt sich in der Regel aus dem Verhältnis der Anzahl der Anhydrid-Gruppen im Härtersystem zu der Anzahl der Epoxy-Gruppen der eingesetzten Epoxidharze. Pro mol enthaltener Epoxy-Gruppe des eingesetzten Epoxidharzes werden 0,3 - 1 mol; besonders bevorzugt 0,5 - 0,8 mol; ganz besonders bevorzugt 0,55 - 0,75 mol Anhydrid-Gruppen eingesetzt.

Bei der Verwendung des erfindungsgemäßen Härtersystems sind mehrere gleichwertige Ausführungsformen denkbar.

In einer Ausführungsform der erfindungsgemäßen Erfindung wird zunächst das oben beschriebene Härtersystem aus mindestens einer aromatischen Dianhydridverbindung A mit einem Schmelzpunkt von mindestens 35 °C, mindestens einer Monoanhydridverbindung B mit einem Schmelzpunkt von nicht mehr als 30 °C und mindestens einem Katalysator C hergestellt und anschließend mit mindestens einen Epoxidharz gemischt. Ein wesentlicher Vorteil dieser Ausführungsform liegt darin, dass der Anwender nur das Epoxidharz und das Härtersystem bei der Anwendung im Sinne eines Zwei-Komponentensystems zusammen bringen muss. Eine getrennte Aufbewahrung der Einzelkomponenten des Härtersystems ist nicht erforderlich, was zu einer vereinfachten Anwendbarkeit führt.

In einer weiteren Ausführungsform der vorliegenden Erfindung kann zunächst nur eine Mischung des mindestens einen Epoxidharzes mit einer Mischung aus mindestens einer aromatischen Dianhydridverbindung A mit einem Schmelzpunkt von mindestens 35 °C, mindestens einer Monoanhydridverbindung B mit einem Schmelzpunkt von nicht mehr als 30 °C vorliegen, zu der anschließend der mindestens eine Katalysator C separat zugegeben wird. In Summe liegt dann nach Zugabe des Katalysators C in dem Epoxidharzsystem ebenfalls wieder die erfindungsgemäße Kombination des Härtersystems enthaltend i) mindestens eine aromatische Dianhydridverbindung A mit einem Schmelzpunkt von mindestens 35 °C, ii) mindestens eine Monoanhydridverbindung B mit einem Schmelzpunkt von nicht mehr als 30 °C und iii) mindestens einen Katalysator C vor. In diesem Falle liegt die aromatische Dianhydridverbindung A mit einem Schmelzpunkt von mindestens 35 °C dispergiert in dem Gesamtsystem vor. Hierzu wird zunächst die mindestens eine aromatische Dianhydridverbindung A mit einem Schmelzpunkt von mindestens 35 °C mit mindestens einer Monoanhydridverbindung B mit einem Schmelzpunkt von nicht mehr als 30 °C vermischt, so dass die Dianhydridverbindung A in der Monoanhydridverbindung B dispergiert vorliegt. Diese Dispersion wird dann dem mindestens einen Epoxidharz zugegeben. Zur eigentlichen Härtung wird dann der mindestens eine Katalysator C zugegeben und die Härtung durchgeführt. Für die Erreichung des erfindungswesentlichen Vorteils kommt es nur darauf an, dass bei der eigentlichen Aushärtung der Epoxidharze das erfindungsgemäße Epoxidharz vorliegt. Dem Anwender wird damit die Möglichkeit gegeben, die Vorteile des erfindungsgemäßen Härtersystems zu nutzen, aber gleichzeitig zusätzlich Freiheit hinsichtlich der Reihenfolge der Zugabe der Einzelkomponenten zu erlangen.

Somit sind Verfahren zur Härtung von Epoxidharzsystemen, wobei in einem ersten Schritt eine Mischung aus mindestens einer aromatischen Dianhydridverbindung A mit einem Schmelzpunkt von mindestens 35 °C und mindestens einer Monoanhydridverbindung B mit einem Schmelzpunkt von nicht mehr als 30 °C mit mindestens einem Epoxidharz gemischt wird, wobei die aromatische Dianhydridverbindung A in der Monoanhydridverbindung B dispergiert vorliegt, in einem zweiten Schritt mindestens ein Katalysator C zugegeben wird und anschließend das mindestens eine Epoxidharz bei einer Temperatur von mindestens 25 °C ausgehärtet wird, ebenfalls Gegenstand.

Ein weiterer Gegenstand sind Verfahren zur Härtung von Epoxidharzsystemen, wobei in einem ersten Schritt eine Mischung aus mindestens einer aromatischen Dianhydridverbindung A mit einem Schmelzpunkt von mindestens 35 °C, mindestens einer Monoanhydridverbindung B mit einem Schmelzpunkt von nicht mehr als 30 °C und mindestens einem Katalysator C, wobei die aromatische Dianhydridverbindung A in dem Härtersystem dispergiert vorliegt, mit mindestens einem Epoxidharz gemischt wird und anschließend das mindestens eine Epoxidharz bei einer Temperatur von mindestens 25 °C ausgehärtet wird.

In den Verfahren zur Härtung von Epoxidharzsystemen erfolgt die Aushärtung bei einer Temperatur von mindestens 25 °C, insbesondere bei einer Temperatur von mindestens 50 °C, wobei die Aushärtung ganz besonders bevorzugt bei einer Temperatur unterhalb der Schmelztemperatur der aromatischen Dianhydridverbindung A erfolgt, insbesondere bei einer Temperatur von nicht mehr als 200 °C, insbesondere von nicht mehr als 180 °C.

Die vorliegende Erfindung umfasst somit unter anderem die folgenden Ausführungsformen, die im Folgenden als Punkte 1 bis 12 wiedergegeben sind:
Punkt 1: Härtersysteme für Epoxidharze enthaltend i) mindestens eine aromatische Dianhydridverbindung A mit einem Schmelzpunkt von mindestens 35 °C, ii) mindestens eine Monoanhydridverbindung B mit einem Schmelzpunkt von nicht mehr als 30 °C und iii) mindestens einen Katalysator C, wobei die aromatische Dianhydridverbindung A in dem Härtersystem dispergiert vorliegt,
   dadurch gekennzeichnet, dass die aromatische Dianhydridverbindung A ausgewählt ist aus Benzo[1,2-c:4,5-c']difuran-1,3,5,7-tetraon,
   [4,4'-Biisobenzofuran]-1,1',3,3'-tetraon, [4,5'-Biisobenzofuran]-1,1',3,3'-tetraon, 5,5'-(Perfluoropropan-2,2-diyl)bis(isobenzofuran-1,3-dion), 5,5'-Carbonylbis(isobenzofuran-1,3-dion), 4-(1,3-Dioxo-1,3-dihydroisobenzofuran-5-carbonyl)isobenzofuran-1,3-dion, 5,5'-Oxybis(isobenzofuran-1,3-dion), 5,5'-Sulfonylbis(isobenzofuran-1,3-dion), Isochromeno[6,5,4-def]isochromen-1,3,6,8-tetraon und/oder deren substituierten Derivaten.

Punkt 2: Härtersystem gemäß Punkt 1, dadurch gekennzeichnet, dass die aromatische Dianhydridverbindung A ausgewählt ist aus 5,5'-Carbonylbis(isobenzofuran-1,3-dion), und/oder Benzo[1,2-c:4,5-c']difuran-1,3,5,7-tetraon.

Punkt 3: Härtersystem gemäß Punkt 1 oder 2, dadurch gekennzeichnet, dass die Monoanhydridverbindung B insbesondere ausgewählt ist aus der Gruppe umfassend cyclische Anhydride von aromatischen, aliphatischen, cycloaliphatischen und heterocyclischen Polycarbonsäuren.

Punkt 4: Härtersystem gemäß einem oder mehreren der Punkte 1 bis 3, dadurch gekennzeichnet, dass die Monoanhydridverbindungen B ausgewählt ist aus Methylhexahydroisobenzofuran-1,3-dion, 5-Methyl-3a,4,7,7a-tetrahydro-4,7-methanoisobenzofuran-1,3-dion, 3-Methylfuran-2,5-dion, 3,3,4,4,5,5-hexafluorodihydro-2H-pyran-2,6(3*H*)-dion und/oder 3,3-Dimethyldihydrofuran-2,5-dion.

Punkt 5: Härtersystem gemäß einem oder mehreren der Punkte 1 bis 4, dadurch gekennzeichnet, dass der Katalysator C ausgewählt ist aus Aminen, cycloaliphatischen oder aromatischen *N*-Heterocyclen oder phenolischen Aminen und/oder Metallsalzen.

Punkt 6: Härtersystem gemäß einem oder mehreren der Punkte 1 bis 5, dadurch gekennzeichnet, dass der Katalysator C ausgewählt ist aus *N,N*-Dimethyl-1-benzylamin, *N¹,N¹*-Dimethyl-*N³*-(2,2,6,6-tetramethylpiperidin-4-yl)propan-1,3-diamin, 1,2,2,6,6-Pentamethylpiperidin-4-ol, 2-Ethyl-4-methyl-1*H*-imidazol, 1-Methyl-1*H*-imidazol, 2-Phenyl-1*H-*imidazol, (4-Methyl-2-phenyl-1*H*-imidazol-5-yl)methanol, (2-Phenyl-1H-imidazol-4,5-diyl)dimethanol, 1,3-Dialkyl-1*H*-imidazol-3-iumsalzen, 2,6-Di-tert-butyl-4-dimethylaminomethylphenol und/oder 1-Methylimidazolium-zink(II)-acetylacetonat.

Punkt 7: Härtersystem gemäß einem oder mehreren der Punkte 1 bis 6, dadurch gekennzeichnet, dass die eingesetzte aromatische Dianhydridverbindung A eine mittlere Partikelgröße von weniger als 100 µm, bestimmt nach DIN EN ISO 8130-13, aufweist.

Punkt 8: Verwendung von Härtersystemen gemäß einem oder mehreren der Punkte 1 bis 7 zur Härtung von Epoxidharzsystemen.

Punkt 9: Epoxidharzsystem, umfassend mindestens ein Epoxidharz und mindestens ein Härtersystem gemäß einem oder mehreren der Punkte 1 bis 7.

Punkt 10: Epoxidharzsystem gemäß Punkt 9, dadurch gekennzeichnet, dass es kein Lösungsmittel enthält.

Punkt 11: Epoxidharzsystem gemäß Punkt 9 oder 10, dadurch gekennzeichnet, dass pro mol enthaltener Epoxy-Gruppe des eingesetzten Epoxidharzes 0,3 - 1 mol Anhydrid-Gruppen eingesetzt werden.

Punkt 12: Epoxidharzsystem gemäß einem oder mehreren der Punkte 9 bis 11, dadurch gekennzeichnet, dass keine aminischen Epoxidharze vorliegen.

Die nun folgenden Beispiele geben bevorzugte Ausführungsformen der vorliegenden Erfindung wieder und sollen nicht so verstanden werden, als beschränkten sie die vorliegende Erfindung in irgendeiner Art und Weise.

### Beispiele:

### Allgemeines:

### Chemikalien

In den folgenden Beispielen werden Handelsnamen verwendet, welche die folgenden Bedeutungen haben:
"Lindride 32" bezeichnet MTHPA.

"Lindride 52 D" bezeichnet MHHPSA.

"Celloxide 2021 P" bezeichnet 7-Oxabicyclo[4.1.0]heptan-3-ylmethyl 7-oxabicyclo[4.1.0]heptan-3-carboxylat und hat die folgende Struktur:

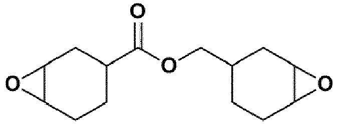

"EPIKOTE Resin 883" bezeichnet ein Epoxyharz, welches sich zusammensetzt aus einem Bisphenol F-Epichlorhydrinharz (50 - 70 %), einem Bisphenol A-Epichlorhydrinharz (25 - 35 %) und aus Propylenglycol (12,5 - 15 %).

"Epicure Catalyst 100" ist 1-Methyl-1 H-imidazol und hat die folgende Struktur:

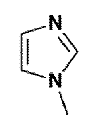

"Epicure Curing Agent 868" ist N,N-Dimethyl-1-phenylmethanamin und hat die folgende Struktur:

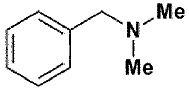

"Araldite 506" bezeichnet ein Epoxyharz, welches sich zusammensetzt aus einem Bisphenol A-Epichlorhydrinharz sowie einem weiteren Epoxyharz.

"Epilox P13-30" ist 2,2'-(((2-Ethyl-2-((oxiran-2-ylmethoxy)methyl)propan-1,3-diyl)bis(oxy))bis(methylen))bis(oxiran) und hat die folgende Struktur:

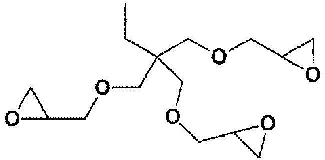

"Epilox A18-00" ist 2,2'-(((Propan-2,2-diylbis(4,1-phenylen))bis(oxy))bis(methylen))bis(oxiran) und hat die folgende Struktur:

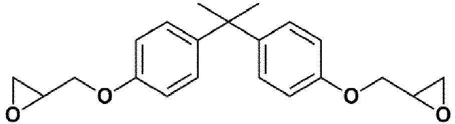

"Araldit CY 5948" bezeichnet ein Epoxyharz, welches sich zusammensetzt aus einem Bisphenol A/F-Epichlorhydrinharz (60 - 100 %) und aus Polyethylenglycol 200-600 (7 - 13 %).

"EPIKOTE Resin 166" bezeichnet ein Epoxyharz, welches sich zusammensetzt aus einem Bisphenol F-Epichlorhydrinharz und einem Bisphenol A-Epichlorhydrinharz.

"Bisphenol F" ist 4,4'-Methylendiphenol und hat die folgende Struktur:

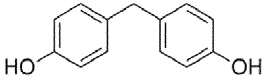

"Bisphenol A" ist 4,4'-(Propan-2,2-diyl)diphenol und hat die folgende Struktur:

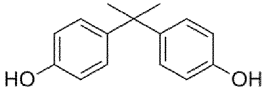

Die Verarbeitungstemperatur liegt idealerweise bei 0 - 30 °C.

Die Herstellung der Prüfkörper erfolgt durch Befüllen von Aluminiumtiegeln mit etwa 10 g Material und anschließender Aushärtung im Ofen. Die so erhaltenen Prüfkörper sind scheibenförmig mit einem Durchmesser von ca. 5,0 cm und einer Dicke von ca. 0,5 cm.

Folgende Aushärtungstemperaturprofile kamen zum Einsatz:
Aushärtungsprogramm 1: Erhitzen der Mischung für 4 h auf 70 °C.
Aushärtungsprogramm 2: Erhitzen der Mischung für 4 h auf 70 °C und weitere 10 h auf 130 °C.
Aushärtungsprogramm 3: Erhitzen der Mischung für 5 h auf 70 °C, 10h auf 130 °C, 5 h auf 150 °C, 5h auf 180 °C und weitere 5 h auf 200 °C.
Aushärtungsprogramm 4: Erhitzen der Mischung für 2 h auf 180 °C.

DSC-Messungen: Die Messungen wurden in einem DSC 200 F3 Maia Gerät von der Firma Netzsch nach DIN EN ISO 11357 durchgeführt. Davon abweichend betrug die Aufheizrate 10 K/min.

### Beispiel 1 (erfindungsgemäß):

Es werden MNA (15 g) und Lindride 52 D der Firma Lindau (805 g) vorgelegt. Danach wird s-BTDA (180 g) zugeben. Die Komponenten werden mit *N,N*-Dimethyl-1-benzylamin (5 g) kräftig gemischt. Die so erhaltene Mischung wird mit Celloxide 2021 P der Firma Daicel (1000 g) vermengt. Prüfkörper hergestellt gemäß Aushärtungsprogramm 1 sind formstabil, klar und frei von Feststoffpartikeln. Verwendet man Aushärtungsprogramm 3 so erhält man ein Material mit einer Glasübergangstemperatur von 210 °C.

### Beispiel 2 (erfindungsgemäß):

Es werden MNA (0,3 g) und Lindride 52 D der Firma Lindau (16 g) vorgelegt. Danach wird s-BTDA (4 g) zugeben und kräftig gemischt. Die so erhaltene Mischung wird mit EPIKOTE^{®} Resin 883 der Firma Momentive (20 g) zusammen mit Epicure™ Catalyst 100 der Firma Hexion (0,1 g) vermengt. Prüfkörper hergestellt gemäß Aushärtungsprogramm 2 sind formstabil und man erhält ein Material mit einer Glasübergangstemperatur von 103 °C.

### Beispiel 3 (erfindungsgemäß):

Es werden MNA (15 g) und Lindride 52 D der Firma Lindau (805 g) vorgelegt. Danach wird s-BTDA (180 g) zugeben. Die Komponenten werden zusammen mit lonol^{®} 103 (5 g) kräftig gemischt. Die so erhaltene Mischung wird mit Celloxide 2021 P der Firma Daicel (1000 g) vermengt. Verwendet man Aushärtungsprogramm 2 so erhält man ein Material mit einer Glasübergangstemperatur von 183 °C.

### Beispiel 4 (erfindungsgemäß):

Es werden MNA (2 g) und Epicure™ Curing Agent 868 der Firma Hexion (15 g) vorgelegt. Danach wird s-BTDA (20 g) zugeben. Die Komponenten werden zusammen mit Epicure™ Catalyst 100 der Firma Hexion (0,4 g) kräftig gemischt. Die so erhaltene Mischung wird mit Celloxide 2021 P der Firma Daicel (42 g) vermengt. Prüfkörper hergestellt gemäß Aushärtungsprogramm 4 ergeben ein Material mit einer Glasübergangstemperatur von 194 °C.

### Beispiel 5 (erfindungsgemäß):

Es werden MNA (0,6 g) und Epicure™ Curing Agent 868 der Firma Hexion (30 g) vorgelegt. Danach wird s-BTDA (7 g) zugeben. Die Komponenten werden zusammen mit Epicure™ Catalyst 100 der Firma Hexion (0,2 g) kräftig gemischt. Die so erhaltene Mischung wird mit Celloxide 2021 P der Firma Daicel (36 g) vermengt. Prüfkörper hergestellt gemäß Aushärtungsprogramm 1 sind formstabil, klar und frei von Feststoffpartikeln. Verwendet man Aushärtungsprogramm 2 so erhält man ein Material mit einer Glasübergangstemperatur von 220 °C.

### Beispiel 6 (erfindungsgemäß):

Es werden MNA (15 g) und Lindride 52 D der Firma Lindau (805 g) vorgelegt. Danach wird s-BTDA (180 g) zusammen mit (1Z)Zn(acac)₂ (5 g) zugeben und kräftig gemischt. Die so erhaltene Mischung wird mit Celloxide 2021 P der Firma Daicel (1000 g) vermengt. Prüfkörper hergestellt gemäß Aushärtungsprogramm 2 sind formstabil, klar und frei von Feststoffpartikeln und besitzen eine Glasübergangstemperatur von 182 °C.

### Beispiel 7 (erfindungsgemäß):

Es werden MNA (3 g) und s-BTDA (26 g) vorgelegt. Die beiden Komponenten werden zusammen mit Epicure™ Catalyst 100 der Firma Hexion (0,2 g) kräftig gemischt. Die so erhaltene Mischung wird mit Araldite^{®} 506 der Firma Huntsman (50 g) vermengt. Prüfkörper hergestellt gemäß Aushärtungsprogramm 1 sind formstabil, klar und frei von Feststoffpartikeln. Verwendet man Aushärtungsprogramm 4 so erhält man ein Material mit einer Glasübergangstemperatur von 228 °C.

### Beispiel 8 (erfindungsgemäß):

Es werden s-BTDA (25 g), Epicure™ Catalyst 100 der Firma Hexion (0,9 g), Lindride 52 D der Firma Lindau (136 g) und Celloxide 2021 P der Firma Daicel (162 g) vermengt. Prüfkörper hergestellt gemäß Aushärtungsprogramm 1 sind formstabil und gelb. Verwendet man Aushärtungsprogramm 2 so erhält man ein Material mit einer Glasübergangstemperatur von 242 °C.

### Beispiel 9 (erfindungsgemäß):

Es werden MNA (3 g) und Lindride 52 D der Firma Lindau (160 g) vorgelegt. Danach wird s-BTDA (36 g) zugeben. Die Komponenten werden zusammen mit Epicure™ Catalyst 100 der Firma Hexion (1 g) homogenisiert. Die so erhaltene Mischung wird mit 2-Phenyloxiran (194 g) vermengt. Prüfkörper hergestellt gemäß Aushärtungsprogramm 4 sind formstabil und man erhält ein Material mit einer Glasübergangstemperatur von 253 °C.

### Beispiel 10 (erfindungsgemäß):

Es werden Epicure™ Curing Agent 868 der Firma Hexion (36 g), MNA (1 g) und s-BTDA (8 g) vorgelegt. Die Komponenten werden zusammen mit Epicure™ Catalyst 100 der Firma Hexion (0,5 g) kräftig gemischt. Die so erhaltene Mischung wird mit Celloxide 2021 P der Firma Daicel (38 g) vermengt. Prüfkörper hergestellt gemäß Aushärtungsprogramm 2 sind formstabil, klar und frei von Feststoffpartikeln. Das erhaltene Material hat eine Glasübergangstemperatur von 201 °C.

### Beispiel 11 (erfindungsgemäß):

Es werden Lindride 52 D der Firma Lindau (20 g) und MNA (0,4 g) vorgelegt. Danach wird s-BTDA (4,5 g) zugeben. Die Anhydride werden zusammen mit Epicure™ Catalyst 100 der Firma Hexion (0,2 g) kräftig gemischt. Die so erhaltene Mischung wird mit 2-Butyloxiran (21 g) vermengt. Prüfkörper hergestellt gemäß Aushärtungsprogramm 2 sind formstabil und man erhält ein Material mit einer Glasübergangstemperatur von 131 °C.

### Beispiel 12 (erfindungsgemäß):

Es werden MNA (1 g) und Lindride 52 D der Firma Lindau (54 g) vorgelegt. Danach wird s-BTDA (12 g) zugeben. Die Komponenten werden zusammen mit Epicure™ Catalyst 100 der Firma Hexion (0,4 g) kräftig gemischt. Die so erhaltene Mischung wird mit Epilox^{®} P13-30 (82 g) vermengt. Prüfkörper hergestellt gemäß Aushärtungsprogramm 2 sind formstabil und man erhält ein Material mit einer Glasübergangstemperatur von 71 °C.

### Beispiel 13 (erfindungsgemäß):

Es werden MNA (1 g) und Lindride 52 D der Firma Lindau (54 g) vorgelegt. Danach wird s-BTDA (12 g) zugeben. Die Komponenten werden zusammen mit Epicure™ Catalyst 100 der Firma Hexion (0,4 g) kräftig gemischt. Die so erhaltene Mischung wird mit Epilox^{®} A18-00 (68 g) vermengt. Prüfkörper hergestellt gemäß Aushärtungsprogramm 2 sind formstabil und man erhält ein Material mit einer Glasübergangstemperatur von 144 °C.

### Beispiel 14 (erfindungsgemäß):

Es werden MNA (15 g) und Lindride 52 D der Firma Lindau (805 g) vorgelegt. Danach wird s-BTDA (180 g) zugeben. Die Komponenten werden nun mit 2P4MHZ (5 g) kräftig gemischt. Die so erhaltene Mischung wird mit Celloxide 2021 P der Firma Daicel (1000 g) vermengt. Prüfkörper hergestellt gemäß Aushärtungsprogramm 1 sind formstabil, klar und frei von Feststoffpartikeln. Verwendet man Aushärtungsprogramm 2 so erhält man ein Material mit einer Glasübergangstemperatur von 222 °C. Verwendet man Aushärtungsprogramm 3 so erhält man ein Material mit einer Glasübergangstemperatur von 205 °C.

### Beispiel 15 (erfindungsgemäß):

Es werden Lindride 52 D der Firma Lindau (86 g) und MNA (2 g) vorgelegt. Danach wird s-BTDA (20 g) zugeben. Die Anhydride werden zusammen mit Epicure™ Catalyst 100 der Firma Hexion (0,5 g) kräftig gemischt. Die so erhaltene Mischung wird mit Araldit CY 5948 der Firma Huntsman (110 g) vermengt. Prüfkörper hergestellt gemäß Aushärtungsprogramm 2 sind formstabil und man erhält ein Material mit einer Glasübergangstemperatur von 111 °C.

### Beispiel 16 (erfindungsgemäß):

Es werden Epicure™ Curing Agent 868 der Firma Hexion (30 g), MNA (1 g) und s-BTDA (7 g) vorgelegt. Die Komponenten werden zusammen mit Epicure™ Catalyst 100 der Firma Hexion (0,1 g) kräftig gemischt. Die so erhaltene Mischung wird mit Celloxide 2021 P der Firma Daicel (47 g) vermengt. Prüfkörper hergestellt gemäß Aushärtungsprogramm 1 sind formstabil, klar und frei von Feststoffpartikeln. Verwendet man Aushärtungsprogramm 2 so erhält man ein Material mit einer Glasübergangstemperatur von 200 °C.

### Beispiel 17 (erfindungsgemäß):

Es werden Epicure™ Curing Agent 868 der Firma Hexion (23 g), MNA (1 g) und s-BTDA (14 g) vorgelegt. Die Komponenten werden zusammen mit Epicure™ Catalyst 100 der Firma Hexion (0,4 g) kräftig gemischt. Die so erhaltene Mischung wird mit Epicote™ Resin 166 der Firma Hexion (49 g) vermengt. Prüfkörper hergestellt gemäß Aushärtungsprogramm 1 sind formstabil, klar und frei von Feststoffpartikeln. Das erhaltene Material hat eine Glasübergangstemperatur von 145 °C.

### Beispiel 18 (erfindungsgemäß):

Es werden Epicure™ Curing Agent 868 der Firma Hexion (15 g), MNA (2 g) und s-BTDA (20 g) vorgelegt. Die Komponenten werden zusammen mit Epicure™ Catalyst 100 der Firma Hexion (0,4 g) kräftig gemischt. Die so erhaltene Mischung wird mit Epicote™ Resin 166 der Firma Hexion (42 g) vermengt. Prüfkörper hergestellt gemäß Aushärtungsprogramm 2 sind formstabil, klar und frei von Feststoffpartikeln. Das erhaltene Material hat eine Glasübergangstemperatur von 184 °C.

### Beispiel 19 (erfindungsgemäß):

Es werden MNA (1 g), Epicure™ Curing Agent 868 der Firma Hexion (36 g) und s-BTDA (8 g) vorgelegt. Die Komponenten werden zusammen mit Epicure™ Catalyst 100 der Firma Hexion (0,5 g) kräftig gemischt. Die so erhaltene Mischung wird mit Celloxide 2021 P der Firma Daicel (38 g) vermengt. Prüfkörper hergestellt gemäß Aushärtungsprogramm 4 ergeben ein Material mit einer Glasübergangstemperatur von 212 °C.

### Beispiel 20 (erfindungsgemäß):

Es werden s-BTDA (25 g), Epicure™ Catalyst 100 der Firma Hexion (0,9 g), MNA (144 g) und Celloxide 2021 P der Firma Daicel (162 g) vermengt. Prüfkörper hergestellt gemäß Aushärtungsprogramm 1 sind formstabil und gelb. Verwendet man Aushärtungsprogramm 2 so erhält man ein Material mit einer Glasübergangstemperatur von 248 °C.

### Beispiel 21 (erfindungsgemäß):

Zur Überprüfung der Wärmestabilität wurde das Material aus Beispiel 1 einem Lagertest unterzogen. Das Material zeigte nach 480 h bei 204 °C einen Masseverlust von 1 %.

### Beispiel 22 (nicht erfindungsgemäß):

Es werden Maleinsäureanhydrid (74 g), Epicure™ Catalyst 100 der Firma Hexion (0,9 g) und Celloxide 2021 P der Firma Daicel (162 g) vermengt. Das Gemisch reagiert unter starker Exothermie. Vom resultierenden Material ist keine Glasübergangstemperatur zu bestimmen.

### Beispiel 23 (nicht erfindungsgemäß):

Es werden s-BTDA (121 g), Epicure™ Catalyst 100 der Firma Hexion (0,9 g) und Celloxide 2021 P der Firma Daicel (162 g) vermengt. Das Gemisch reagiert unter starker Exothermie. Vom resultierenden Material ist keine Glasübergangstemperatur zu bestimmen.

### Beispiel 24 (nicht erfindungsgemäß):

Es werden MNA (106 g), Epicure™ Catalyst 100 der Firma Hexion (0,5 g) und Celloxide 2021 P der Firma Daicel (100 g) vermengt. Das Material war nach 4 h bei 70 °C im Ofen nicht formstabil und wurde daher nicht weiter verwendet.

### Beispiel 25 (erfindungsgemäß):

Es wird Lindride 32 (MTHPA) der Firma Lindau (20 g) vorgelegt. Danach wird s-BTDA (5 g) zugeben. Die Komponenten werden zusammen mit Epicure™ Catalyst 100 der Firma Hexion (0,1 g) kräftig gemischt. Die so erhaltene Mischung wird mit Celloxide 2021 P der Firma Daicel (25 g) vermengt. Prüfkörper hergestellt gemäß Aushärtungsprogramm 2 sind formstabil und man erhält ein Material mit einer Glasübergangstemperatur von 245 °C.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

## Patentansprüche

1. Härtersysteme für Epoxidharze enthaltend i) mindestens eine aromatische Dianhydridverbindung A mit einem Schmelzpunkt von mindestens 35 °C, ii) mindestens eine Monoanhydridverbindung B mit einem Schmelzpunkt von nicht mehr als 30 °C und iii) mindestens einen Katalysator C, wobei die aromatische Dianhydridverbindung A in dem Härtersystem dispergiert vorliegt,
**dadurch gekennzeichnet, dass** die aromatische Dianhydridverbindung A ausgewählt ist aus Benzo[1,2-c:4,5-c']difuran-1,3,5,7-tetraon, [4,4'-Biisobenzofuran]-1,1',3,3'-tetraon, [4,5'-Biisobenzofuran]-1,1',3,3'-tetraon, 5,5'-(Perfluoropropan-2,2-diyl)bis(isobenzofuran-1,3-dion), 5,5'-Carbonylbis(isobenzofuran-1,3-dion), 4-(1,3-Dioxo-1,3-dihydroisobenzofuran-5-carbonyl)isobenzofuran-1,3-dion, 5,5'-Oxybis(isobenzofuran-1,3-dion), 5,5'-Sulfonylbis(isobenzofuran-1,3-dion), Isochromeno[6,5,4-def]isochromen-1,3,6,8-tetraon und/oder deren substituierten Derivaten.

2. Härtersystem gemäß Anspruch 1, **dadurch gekennzeichnet, dass** die aromatische Dianhydridverbindung A ausgewählt ist aus 5,5'-Carbonylbis(isobenzofuran-1,3-dion), und/oder Benzo[1,2-c:4,5-c']difuran-1,3,5,7-tetraon.

3. Härtersystem gemäß Anspruch 1 oder 2, **dadurch gekennzeichnet, dass** die Monoanhydridverbindung B insbesondere ausgewählt ist aus der Gruppe umfassend cyclische Anhydride von aromatischen, aliphatischen, cycloaliphatischen und heterocyclischen Polycarbonsäuren.

4. Härtersystem gemäß einem oder mehreren der Ansprüche 1 bis 3, **dadurch gekennzeichnet, dass** die Monoanhydridverbindungen B ausgewählt ist aus Methylhexahydroisobenzofuran-1,3-dion, 5-Methyl-3a,4,7,7a-tetrahydro-4,7-methanoisobenzofuran-1,3-dion, 5-Methyl-3 a,4,7,7 a-tetrahydroisobenzofuran-1,3-dion, 3-Methylfuran-2,5-dion, 3,3,4,4,5,5-hexafluorodihydro-2*H*-pyran-2,6(3*H*)-dion und/oder 3,3-Dimethyldihydrofuran-2,5-dion.

5. Härtersystem gemäß einem oder mehreren der Ansprüche 1 bis 4, **dadurch gekennzeichnet, dass** der Katalysator C ausgewählt ist aus Aminen, cycloaliphatischen oder aromatischen *N*-Heterocyclen oder phenolischen Aminen und/oder Metallsalzen.

6. Härtersystem gemäß einem oder mehreren der Ansprüche 1 bis 5, **dadurch gekennzeichnet, dass** der Katalysator C ausgewählt ist aus *N,N*-Dimethyl-1-benzylamin, *N¹,N¹*-Dimethyl-*N³*-(2,2,6,6-tetramethylpiperidin-4-yl)propan-1,3-diamin, 1,2,2,6,6-Pentamethylpiperidin-4-ol, 2-Ethyl-4-methyl-1*H*-imidazol, 1-Methyl-1*H*-imidazol, 2-Phenyl-1*H*-imidazol, (4-Methyl-2-phenyl-1*H*-imidazol-5-yl)methanol, (2-Phenyl-1H-imidazol-4,5-diyl)dimethanol, 1,3-Dialkyl-1*H*-imidazol-3-iumsalzen, 2,6-Di-*tert*-butyl-4-dimethylaminomethylphenol und/oder 1-Methylimidazolium-zink(II)-acetylacetonat.

7. Härtersystem gemäß einem oder mehreren der Ansprüche 1 bis 6, **dadurch gekennzeichnet, dass** die eingesetzte aromatische Dianhydridverbindung A eine mittlere Partikelgröße von weniger als 100 µm, bestimmt nach DIN EN ISO 8130-13, aufweist.

8. Verwendung von Härtersystemen gemäß einem oder mehreren der Ansprüche 1 bis 7 zur Härtung von Epoxidharzsystemen.

9. Epoxidharzsystem, umfassend mindestens ein Epoxidharz und mindestens ein Härtersystem gemäß einem oder mehreren der Ansprüche 1 bis 7.

10. Epoxidharzsystem gemäß Anspruch 9, **dadurch gekennzeichnet, dass** es kein Lösungsmittel enthält.

11. Epoxidharzsystem gemäß Anspruch 9 oder 10, **dadurch gekennzeichnet, dass** pro mol enthaltener Epoxy-Gruppe des eingesetzten Epoxidharzes 0,3 - 1 mol Anhydrid-Gruppen eingesetzt werden.

12. Epoxidharzsystem gemäß einem oder mehreren der Ansprüche 9 bis 11, **dadurch gekennzeichnet, dass** keine aminischen Epoxidharze vorliegen.

## Claims

1. Hardener systems for epoxy resins comprising i) at least one aromatic dianhydride compound A having a melting point of at least 35°C, ii) at least one monoanhydride compound B having a melting point of not more than 30°C and iii) at least one catalyst C, the aromatic dianhydride compound A being dispersed in the hardener system, **characterized in that** the aromatic dianhydride compound A is selected from benzo[1,2-c:4,5-c']difuran-1,3,5,7-tetraone, [4,4'-biisobenzofuran]-1,1',3,3'-tetraone, [4,5'-biisobenzofuran]-1,1',3,3'-tetraone, 5,5'-(perfluoropropane-2,2-diyl)bis(isobenzofuran-1,3-dione), 5,5'-carbonylbis(isobenzofuran-1,3-dione), 4-(1,3-dioxo-1,3-dihydroisobenzofuran-5-carbonyl)isobenzofuran-1,3-dione, 5,5'-oxybis(isobenzofuran-1,3-dione), 5,5'-sulphonylbis(isobenzofuran-1,3-dione), isochromeno[6,5,4-def]isochromene-1,3,6,8-tetraone and/or substituted derivatives thereof.

2. Hardener system according to Claim 1, **characterized in that** the aromatic dianhydride compound A is selected from 5,5'-carbonylbis(isobenzofuran-1,3-dione), and/or benzo[1,2-c:4,5-c']difuran-1,3,5,7-tetraone.

3. Hardener system according to Claims 1 or 2, **characterized in that** the monoanhydride compound B is especially selected from the group comprising cyclic anhydrides of aromatic, aliphatic, cycloaliphatic and heterocyclic polycarboxylic acids.

4. Hardener system according to one or more of Claims 1 to 3, **characterized in that** the monoanhydride compound B is selected from methylhexahydroisobenzofuran-1,3-dione, 5-methyl-3a,4,7,7a-tetrahydro-4,7-methanoisobenzofuran-1,3-dione, 5-methyl-3a,4,7,7a-tetrahydroisobenzofuran-1,3-dione, 3-methylfuran-2,5-dione, 3,3,4,4,5,5-hexafluorodihydro-2*H*-pyran-2,6(3*H*)-dione and/or 3,3-dimethyldihydrofuran-2,5-dione.

5. Hardener system according to one or more of Claims 1 to 4, **characterized in that** the catalyst C is selected from amines, cycloaliphatic or aromatic N-heterocycles or phenolic amines and/or metal salts.

6. Hardener system according to one or more of Claims 1 to 5, **characterized in that** the catalyst C is selected from *N,N*-dimethyl-1-benzylamine, *N¹,N¹*-dimethyl-*N*³-(2,2,6,6-tetramethylpiperidin-4-yl)propane-1,3-diamine, 1,2,2,6,6-pentamethylpiperidin-4-ol, 2-ethyl-4-methyl-1*H-*imidazole, 1-methyl-1*H*-imidazole, 2-phenyl-1*H-*imidazole, (4-methyl-2-phenyl-1*H*-imidazol-5-yl)methanol, (2-phenyl-1*H*-imidazole-4,5-diyl)dimethanol, 1,3-dialkyl-1*H*-imidazol-3-ium salts, 2,6-di-*tert*-butyl-4-dimethylaminomethylphenol and/or (1-methylimidazolium)zinc(II) acetylacetonate.

7. Hardener system according to one or more of Claims 1 to 6, **characterized in that** the aromatic dianhydride compound A used has a mean particle size of less than 100 µm, determined to DIN EN ISO 8130-13.

8. Use of hardener systems according to one or more of Claims 1 to 7 for hardening of epoxy resin systems.

9. Epoxy resin system comprising at least one epoxy resin and at least one hardener system according to one or more of Claims 1 to 7.

10. Epoxy resin system according to Claim 9, **characterized in that** it does not comprise any solvent.

11. Epoxy resin system according to Claim 9 or 10, **characterized in that** 0.3-1 mol of anhydride groups is used per mole of epoxy group present in the epoxy resin used.

12. Epoxy resin system according to one or more of Claims 9 to 11, **characterized in that** no aminic epoxy resins are present.

## Revendications

1. Système de durcisseur pour résines époxy contenant i) au moins un composé dianhydride aromatique A ayant un point de fusion d'au moins 35°C, ii) au moins un composé monoanhydride B ayant un point de fusion de pas plus de 30°C et iii) au moins un catalyseur C, dans lequel le composé dianhydride aromatique A se trouve sous forme dispersée dans le système de durcisseur, **caractérisé en ce que** le composé dianhydride aromatique A est sélectionné parmi benzo[1,2-c:4,5-c']difurane-1,3,5,7-tétraone, [4,4'-biisobenzofurane]-1,1',3,3'-tétraone, [4,5'-biisobenzofurane]-1,1',3,3'-tétraone, 5,5'-(perfluoropropane-2,2-diyl)bis(isobenzofurane-1,3-dione), 5,5'-carbonylbis(isobenzofurane-1,3-dione), 4-(1,3-dioxo-1,3-dihydroisobenzofurane-5-carbonyl)isobenzofurane-1,3-dione, 5,5'-oxybis(isobenzofurane-1,3-dione), 5,5'-sulfonylbis(isobenzofurane-1,3-dione), isochromeno[6,5,4-def]isochromen-1,3,6,8-tétraone et/ou leur dérivés substitués.

2. Système de durcisseur selon la revendication 1, **caractérisé en ce que** le composé dianhydride aromatique A est sélectionné parmi 5,5'-carbonylbis-(isobenzofurane-1,3-dione) et/ou benzo[1,2-c:4,5-c']-difurane-1,3,5,7-tétraone.

3. Système de durcisseur selon la revendication 1 ou 2, **caractérisé en ce que** le composant monoanhydride B est sélectionné en particulier dans le groupe comprenant des anhydrides cycliques d'acides polycarboxyliques aromatiques, aliphatiques, cycloaliphatiques et hétérocycliques.

4. Système de durcisseur selon une ou plusieurs des revendications 1 à 3, **caractérisé en ce que** le composé monoanhydride B est sélectionné parmi méthylhexahydro-isobenzofurane-1,3-dione, 5-méthyl-3a,4,7,7a-tétrahydro -4,7-méthanoisobenzofurane-1,3-dione, 5-méthyl-3a,4,7,7a-tétrahydroisobenzofurane-1,3-dione, 3-méthylfurane-2,5-dione, 3,3,4,4,5,5-hexafluorodihydro-2H-pyrane-2,6(3*H*)-dione et/ou 3,3-diméthyldihydrofurane-2,5-dione.

5. Système de durcisseur selon une ou plusieurs des revendications 1 à 4, **caractérisé en ce que** le catalyseur C est sélectionné parmi des amines, des *N-*hétérocycles cycloaliphatiques ou aromatiques ou des amines phénoliques et/ou des sels métalliques.

6. Système de durcisseur selon une ou plusieurs des revendications 1 à 5, **caractérisé en ce que** le catalyseur C est sélectionné parmi *N*,*N*-diméthyl-1-benzylamine, *N¹,N¹*-diméthyl-*N³*-(2,2,6,6-tétraméthylpipéridine-4-yl)propane-1,3-diamine, 1,2,2,6,6-pentaméthylpipéridine-4-ole, 2-éthyl-4-méthyl-1*H*-imidazole, 1-méthyl-1*H*-imidazole, 2-phényl-1*H*-imidzole, (4-méthyl-2-phényl-1*H*-imidazole-5-yl)méthanol, (2-phényl-1*H-*imidazole-4,5-diyl)diméthanol, sels de 1,3-dialkyl-1*H-*imidazole-3-ium, 2,6-di-*tert*-butyl-4-diméthylamino-méthylphénol et/ou acétylacétonate de 1-méthyl-imidazolium-zinc (II).

7. Système de durcisseur selon une ou plusieurs des revendications 1 à 6, **caractérisé en ce que** le composé dianhydride aromatique A utilisé présente une taille de particules moyenne de moins de 100 µm, déterminée selon la norme DIN EN ISO 8130-13.

8. Utilisation de systèmes de durcisseur selon une ou plusieurs des revendications 1 à 7 pour le durcissement de systèmes de résines époxy.

9. Système de résine époxy, comprenant au moins une résine époxy et au moins un système de durcisseur selon une ou plusieurs des revendications 1 à 7.

10. Système de résine époxy selon la revendication 9, **caractérisé en ce qu'**il ne contient pas de solvant.

11. Système de résine époxy selon la revendication 9 ou 10, **caractérisé en ce que** l'on utilise 0,3 - 1 1 mole de groupes anhydride par mole de groupe époxy contenu de la résine époxy utilisée.

12. Système de résine époxy selon une ou plusieurs des revendications 9 à 11, **caractérisé en ce qu'**il n'y a pas de résines époxy aminées.
